# EUROPEAN PATENT APPLICATION

(11) **EP 2 765 541 A1**
(43) Date of publication of application: **13.08.2014**
(21) Application number: 14152415.7
(22) Date of filing: 24.01.2014
(51) Int. Cl.: G06Q 10/00, G06F 21/10, G06Q 30/06

(54) **Physical and electronic book reconciliation**

(30) Priority: 08.02.2013 US 201313762750
(71) Applicant: Xerox Corporation, Rochester, New York 14644 (US)
(72) Inventor: Cheminot, Eric, 38240 Meylan (FR)
(74) Representative: Skone James, Robert Edmund

(57) **Abstract**

A system and method of providing access to a digital version of a publication are disclosed. The method includes receiving a publication identifier (S106), such as a graphical encoding or information extracted therefrom, from a client device. The publication identifier identifies a hardcopy version of a publication. A challenge is provided (S110) to a user of the client device, the challenge being associated with a correct response which is identifiable by the user from the hardcopy version of the publication. A response to the challenge is received (S114) from the user. The user's response is compared to the correct response and, based on the comparison, a determination is made as to whether the user's response is the correct response (S116). For a response which is determined to be correct, the method includes providing access (S118) to at least a portion of a digital version of the hardcopy publication. Limits on usage of the digital version may be enforced through Digital Rights Management.

## Description

The exemplary embodiment relates to digital rights management and in particular to providing access to digital media to a user who is already in possession of a hardcopy version.

Consumers have the option of purchasing many books as either a digital version (e.g., an electronic book or "ebook") or as a hardcopy version (a physical book). A consumer may want the convenience of an ebook but not with the limitations that a digital rights management (DRM) system may impose. For example, a consumer may wish to give the book to a friend after reading it, which is possible with a hardcopy but may not be possible with a digital version having DRM. For example, one online retailer of digital books does not allow books to be transferred between accounts and only allows lending with the publisher's permission. A consumer who prefers the hardcopy may also like the convenience of a digital copy, but not at the expense of purchasing both a digital and a hardcopy of the same book. A problem is that the publisher may be unwilling to give unlimited access to both a digital copy and a hard copy due to the risk of losing a sale.

There remains a need for a system that verifies that a hard copy of a book has already been purchased and allows controlled access to a digital copy of the book.

In accordance with one aspect of the exemplary embodiment, a method of providing access to a digital version of a publication is disclosed. The method includes, with a computing device, receiving a publication identifier from a client device, the publication identifier identifying a hardcopy version of a publication and providing a challenge to a user of the client device, the challenge being associated with a correct response which is identifiable by the user from the hardcopy version of the publication. A response to the challenge is received from the user. The user's response is compared to the correct response and based on the comparison, a determination is made as to whether the user's response is the correct response. For a response which is determined to be correct, access is provided to at least a portion of a digital version of the hardcopy publication.

One or more of the providing a challenge, compared the response to the correct response, and providing access may be performed with a computer processor.

In the method, the publication identifier may include a machine-readable graphical encoding.

The method may further include comparing the received publication identifier with a stored publication identifier to determine whether the received publication identifier matches the stored publication identifier, the challenge being provided only when the received publication identifier is determined to match the stored publication identifier.

The challenge may identify a location in the hardcopy publication where the correct response is identifiable.

The challenge may have a correct response which in the form of text that is printed at the identified location in the hardcopy publication.

The challenge may be to identify a picture at the identified location in the hardcopy publication.

The location may be selected at random from a set of locations, each location in the set being associated with a respective challenge.

Access to the at least a portion of the digital version of the publication may be provided by enabling the client device to download the digital version.

Access to the at least a portion of the digital version of the publication may be provided by enabling viewing of the at least a portion in a web browser.

The at least a portion of the digital version of the hardcopy publication may consist of a first portion of the digital version which is less than all of the digital version.

The access to a second portion of the digital version may be provided at a later time.

The access to the at least a portion of the digital version of the publication may be provided for only a limited period of time.

The access may be controlled by Digital Rights Management data associated with the digital version of the publication.

The publication identifier may be stored in a publication identifier database which includes a set of stored publication identifiers, one for each of a set of hardcopy publications.

Each of a plurality of hardcopy publications may have the same content but different publication identifiers and the publication identifier database may include a stored publication identifier for each of the plurality of hardcopy publications.

The method may further include determining whether the at least the portion of the digital version is accessible for providing to the user based on the received publication identifier.

The method may further include requesting a user identifier prior to receiving a publication identifier from the client device.

The hardcopy publication may be a book.

A computer program product may include a non-transitory computer-readable medium storing instructions which, when executed by a computer, perform the method in any of the embodiments described above.

A system may include memory which stores instructions for performing the method and a processor in communication with the memory for executing the instructions in any of the embodiments described above.

In another aspect of the exemplary embodiment, a system for allowing access to a digital version of a publication based on a hardcopy version of the publication includes a publication identifier component for receiving a publication identifier from a client device, the publication identifier identifying a hardcopy version of a publication. A challenge component provides a challenge to a user of the client device, the challenge being associated with a correct response which is identifiable from the hardcopy version of the publication, for receiving a response from the user, for comparing the user's response to the correct response and, based on the comparison, for determining whether the user's response is the correct response. A digital content provider component provides access to at least a portion of a digital version of the hardcopy publication when the response is determined to be correct.

The system may further include a challenge database which stores a plurality of challenges and respective correct responses, the challenge component accessing the challenge database for providing the challenge.

The system may further include a content database which stores a plurality of digital publications each corresponding to a hardcopy publication and respective correct responses, the digital content provider component accessing the content database for providing the access to the digital publication.

In the system, at least one of the publication identifier component and the challenge component may determine whether the hardcopy version of the publication is associated with digital rights to access the digital publication based on at least one of the received publication identifier and the received user's response.

In another aspect of the exemplary embodiment, a method of allowing access to a digital version of a publication includes receiving a publication identifier from a client device, the publication identifier being derived from a hardcopy version of a publication corresponding to a hardcopy version of a publication having a respective digital version, the publication identifier being derived by capturing an image of graphical encoding affixed to the hardcopy version of the publication, confirming that the publication identifier is associated with digital rights to the digital version, providing a challenge to the client device which is based on the content of a selected location in the hardcopy version of the publication, receiving a response to the challenge from the client device, if the response is determined to be correct, granting access to content to the digital version, including at least one of allowing the user to read at least a portion of the digital version of the publication when the client device is communicatively connected to a digital content provider and allowing a user to download at least a portion of the digital version of the publication, the user's rights to usage of the downloaded at least a portion of the digital version of the publication being enforced by Digital Rights Management information included with the at least the portion of the digital version.
FIGURE 1 is a functional block diagram illustrating an exemplary system which allows a user to enter an identification code to identify a book and then respond to a challenge to prove possession of a book in accordance with one aspect of the exemplary embodiment;
FIGURE 2 is a flow diagram of a book identification and challenge/response method in accordance with another aspect of the exemplary embodiment;
FIGURE 3 illustrates one embodiment for entering a book identification in accordance with the method of FIGURE 2; and
FIGURE 4 illustrates one embodiment of the challenge of the method of FIGURE 2.

The exemplary embodiment allows a user to have access to a digital version of a printed publication after verifying physical possession of the printed publication. The printed publication may be, for example, a book, a periodical (e.g., a magazine or journal), or a combination or portion thereof. The printed publication may be referred to herein as a book. However, it is to be understood that other printed media are also contemplated.

The method may use a machine-readable graphical encoding, such as a QR code, Dataglyph, or barcode, to identify the printed publication. In some embodiments, the graphical encoding is captured and/or recognized by using a camera of the user's smartphone. The system may verify possession of the book by issuing a challenge based on a random location in the content of the book, asking the user to look up the answer using the physical book.

The system and method allow a user to gain access an electronic version of a book without needing to purchase the digital version at its normal cost, while providing the publisher some assurance that the user already owns the book and thus that the publisher is not losing a sale. The exemplary system and method provides a mechanism for the user to identify the hardcopy of the book or other printed publication as well as a mechanism to verify the user is in physical possession of the hardcopy. In some embodiments, there may be a cost for access to the digital version such as a monetary cost, receiving associated advertising, or the like. In other embodiments, the electronic version may be provided at no cost, or included within the cost of the hardcopy.

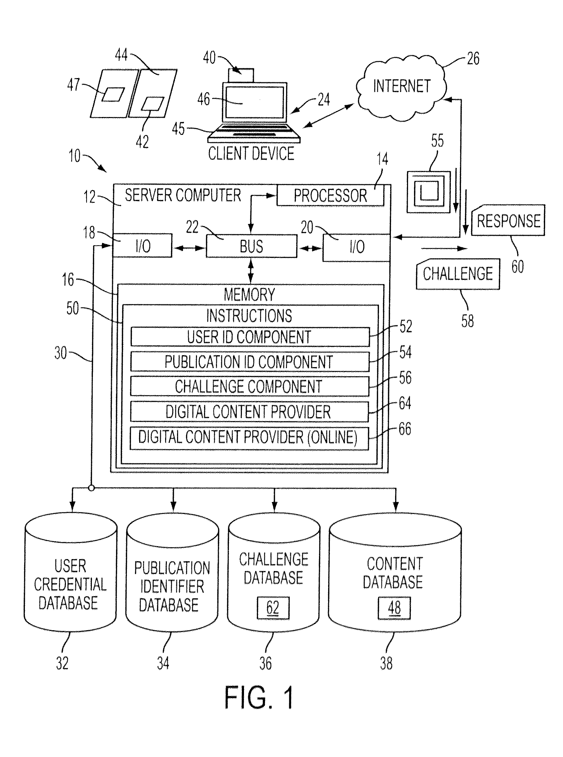

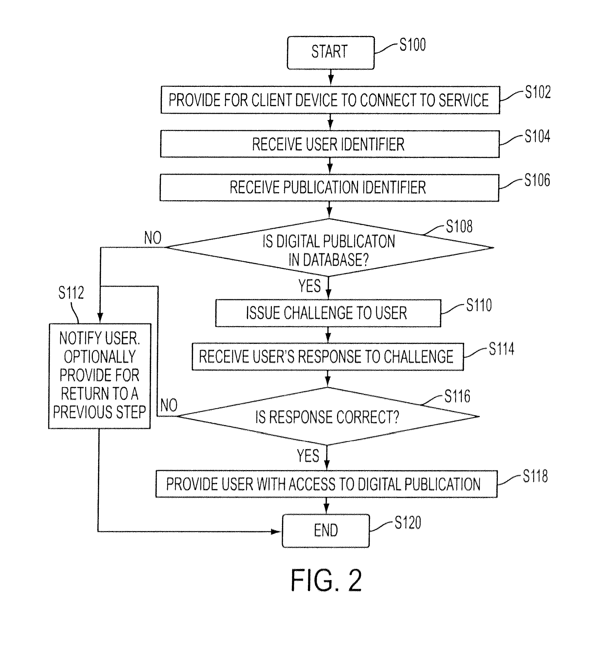

An exemplary digital copy management system 10 is shown in FIGURE 1. An exemplary method for providing access to a digital version of a publication, which may be performed by the system 10, is shown in FIGURE 2.

With reference to FIGURE 1, the digital copy management system 10 includes a computing device 12, such as the illustrated server computer, which includes a processor 14 in communication with a memory 16 and one or more input/output devices 18 and 20. A bus 22 provides the communication connection between the hardware components 14, 16, 18, 20 of the server 12. A remote client computer 24 communicates with the server via a wired or wireless link 26, e.g., a wide area network, such as the Internet. The input/output (I/O) devices 18, 20 connect the server to the wide area network 26 and to other systems, such as to one or more remote databases 32, 34, 36, and 38. It is to be understood that the client computing device 24 may have similar hardware components to the server, except as noted.

Client device 24 may be a desktop, a laptop, palmtop computer, portable digital assistant (PDA), server computer, cellular telephone, tablet computer, pager, combination thereof, or other computing device capable of executing instructions for performing the client-side operations of the exemplary method. In some embodiments, the client device may be a web-enabled cellular telephone (e.g., a "smart phone") which includes a web-browser. While a single client computing device 24 is illustrated, it is to be appreciated that many such devices may be linked to the system 10 by one or more links, such as link 26. The exemplary client device 24 includes an image capture device 40, such as a camera integral with or associated with the client device, suited to capturing an image of an identifier 42, located on a hardcopy publication 44. The client device also includes a user input device 45 such as a keyboard, keypad, touch screen or the like for receiving user inputs and communicating them to the processor of the client device. These may include user responses to challenge questions that are displayed to the user on a display device 46 of the client device, such as an LCD screen, computer monitor, or the like.

In the exemplary embodiment, the client device 24 is thus local at some time, to both the user and the hardcopy publication in order for the publication identifier and response to be obtained from the publication 44. By "local," it is meant within a reasonable viewing distance of the publication identifier, such as up to 10 or 20 meters. By "remote," it is meant beyond viewing distance, such as over 100 meters or over 1000 meters.

The exemplary hardcopy book 44 includes a set of pages such as at least two or at least 10 pages. The identifier 42 can be permanently affixed to the hardcopy document. e.g., marked on one or more of the pages of the hardcopy publication 44 with marking media, such as ink, toner, or the like, formed on the pages by impression, watermark, or the like, or adhesively or otherwise affixed to the hardcopy publication 44. The identifier 42 may be a machine-readable graphical encoding, such as a QR code, dataglyph, or barcode, such as an ISBN code, or it may be a sequence of characters, such as an alphanumeric code. In some embodiments, the identifier is unique to the particular publication copy 44, i.e., every copy of the publication has its own unique identifier, but is otherwise identical in its content (the text and images forming the book). In other embodiments, the identifier 42 may be the same for all or several copies of the hardcopy book 44. The hardcopy publication is offered for sale, either by a web service associated with the system 10 or by a bricks-and-mortar store. The book 44 itself, and/or information provided by the seller and/or system 10, may provide instructions 47 for obtaining a digital version 48 of at least a portion of the hardcopy book from the system 10, such as a web address where the book can be accessed.

The hardcopy book 44 has a corresponding digital version 48, which is substantially similar, in its textual and image content (e.g., at least 50% of the textual content is identical) to the hardcopy book 44, although the electronic version 48 may have been reformatted for ease of viewing on a computing device, such as client device 24. The user's access to and other usage of the digital version 48 may be unlimited or may be at least partially limited, e.g., limited to only a portion of the book or may only be available for a limited time, or transfer between devices may be limited or prevented. The limits to the user's rights may be enforced via the use of Digital Rights Management (DRM), e.g., in the form of code or contractual agreement associated with the digital version.

The memory 16 of the server 12 stores instructions 50 for providing a web service for accessing the digital document 48. In particular, the instructions 50 may include a user identifier component 52 for identifying users who connect with the system from client computers 24. The user ID component 52 communicates with a user credential database 32, which stores user credential data such as login/password pairs, or the like for identifying the specific user to the system 10.

The instructions 50 further include a publication identification component 54 which receives a publication identifier 42 for the hardcopy publication 44 from the client device 24. In one embodiment, the identifier 42 is received in the form of an image 55 captured by the client device camera 40, and stored in memory of the system, such as memory 16. In another embodiment, the client device 24 may include instructions for reading the code 42 present in a captured image and supplying information to the system based thereon, such as an alphanumeric code, which stored in memory of the system. The term "identifier" is used to encompass all forms in which the information it contains is transferred, except as otherwise noted. Component 54 looks up the identifier 42 or information extracted therefrom in a publication identifier database 34, and thereby identifies the hardcopy document 44 which is associated with it and/or its digital counterpart 48.

The instructions 50 further include a challenge component 56 which verifies that a user has physical possession of a book by issuing a challenge via the client device, based on the publication identifier supplied by the user. The challenge component 56 may communicate with a challenge database 36 to retrieve challenges 58 and verify responses 60 which are applicable to the identified hardcopy publication 44 and which are generally not applicable to other hardcopy publications of other books. In particular, the user is presented by the challenge component 56 with a challenge 57 which normally requires the user to have physical possession of the hardcopy book 44 in order to provide a correct response to the challenge. For example, the challenge 58 may be based on a textual or visual content of part of a page, line, or paragraph of the book, which may be selected by the challenge component in a random location in the book, e.g., using a stochastic process in which the selected location is not known in advance. In one embodiment, the challenge and its associated response may be stored together in challenge database 36 along with a set of alternate challenges 58 and corresponding responses 60 for the book 44. In other embodiments, the challenge component 56 and/or challenge database 36 includes instructions for generating a challenge on-the-fly, based on stored information 62 about the content of the hardcopy book 44. For example, given a plurality of pages of the book from which a challenge 58 is permitted to be drawn, the challenge component applies an automated stochastic method for selection of one of the pages and also for selecting, from that page, one of a set of possible locations which will form the basis of a challenge. The nearest complete word or line of text to the selected location may be used in generating the challenge, based on stored knowledge of the positions of the text on the page of the hardcopy book. Alternatively, each word on a page may be assigned a location, such as page 5, firth line, second word, and the locations and words indexed. Automated methods for verbalizing the location for generating the challenge can be developed and stored in memory. In this way, the generation of the challenge and its correct response can be fully automated.

The instructions 50 further include one or more digital content provider components 64, 66. A first of these 64 may provide for offline (downloaded) viewing of the digital version 48 of the hardcopy book while the second 66 may provide for online viewing of the digital version (e.g., the client device 24 is linked to the system while viewing takes place and the user is not permitted to store the publication 48 on the client device, other than for a short period during reading). The content provider component(s) 64, 66 connect to and serve content, such as digital publication 48, from the content database 38. As will be appreciated, computing device 12 and one or more of databases 32, 34, 36, and 38 may be combined into a single computing device. In some embodiments, two or more of databases 32, 34, 36, and 38 are combined into a single database.

The computing device 12 may be a PC, such as a desktop, a laptop, a palmtop computer, a portable digital assistant (PDA), server computer, cellular telephone, tablet computer, page, combination thereof, or other computing device capable of executing instructions for performing all or part of the exemplary method of FIGURE 2.

The memory 16 may represent any type of non-transitory computer readable medium such as random access memory (RAM), read only memory (ROM), magnetic disk or tape, optical disk, or flash memory. In one embodiment, the memory 16 comprises a combination of random access memory and read only memory. In some embodiments, the processor 14 and memory 16 may be combined in a single chip. The I/O devices 18, 20 may include network interfaces that allow the computer to communicate with other devices via a computer network, such as a local area network (LAN) or wide area network (WAN) such as the internet. The I/O devices 18, 20 may comprise a modulator/demodulator (MODEM), a router, and/or Ethernet port. Memory 16 stores instructions for performing the exemplary method as well as the processed data.

The digital processor 14 can be variously embodied, such as by a single or multi-core processor, a digital processor and a cooperating math coprocessor, a digital controller, and the like. The digital processor 14, in addition to controlling the operation of the server computer 12 executes instructions stored in memory 16 for performing the method outlined in FIGURE 2.

The term "software," as used herein, is intended to encompass any collection or set of instructions executable by a computer or other digital system so as to configure the computer or other digital system to perform the task that is the intent of the software. The term "software" as used herein is intended to encompass such instructions stored in storage medium such as RAM, a hard disk, optical disk, or so forth, and is also intended to encompass so-called "firmware" that is software stored in storage medium such as RAM, a hard disk, optical disk, or so forth, and is also intended to encompass so-called "firmware" that is software stored in ROM or so forth. Such software may be organized in various ways, and may include software components organized as libraries, internet-based programs stored on a remote server or so forth, source code, interpreted code, object code, directly executable code, and so forth. It is contemplated that the software may invoke system-level code or calls to other software residing on a server or other location to perform certain functions.

As will be appreciated, FIGURE 1 is a high level functional block diagram of only a portion of the components which are incorporated into a computer system 10. Since the configuration and operation of programmable computers are well known, they will not be described further.

With reference now to FIGURE 2, an exemplary method is shown which may be performed by the system of FIGURE 1. The method begins at S100.

At S102, provision is made for a client computer 24, operated by a user, to connect to the server 12. The system 10 may provide for downloading a thin client onto client device which includes part of the instructions for performing the method.

At S104, user identification information is received by the system and verified by the system, for example by user ID component 52. The user identification information may be supplied by the user via the client device 24 and is received by the system. This may be performed, for example, by providing for loading a web page on the client device 24 and displaying fields on the webpage in which the user can enter login information and a password. The user's identity may also be verified, for example, by sending biometric data (e.g., fingerprints) to the server, with a secure card having an embedded chip containing cryptographic information, and/or by a one-time key which is sent to the user or generated by a key generator which generates identical keys to a server, synchronized in time. The user may have a pre-existing account with the service or may establish an account. The account may be tied to another type of account, such as an email or online shopping account.

At S106, publication identification 42, 55 is received by the system. The user may identify the book to the server by sending identifying information via the network 26. A QR code or other two dimensional barcode, such as a barcode encoding an International Standard Book Number (ISBN) may be submitted by the client device. The device 40 may be configured for automatically taking a picture of the cover or a page in the book or instructions may be displayed for a user to do so. The book may have a first code which is specifically for allowing a digital version of the book to be downloaded. The book may also have a second code, such as a serial number, so that only one digital version for a given hardcopy 44 may be downloaded at a time.

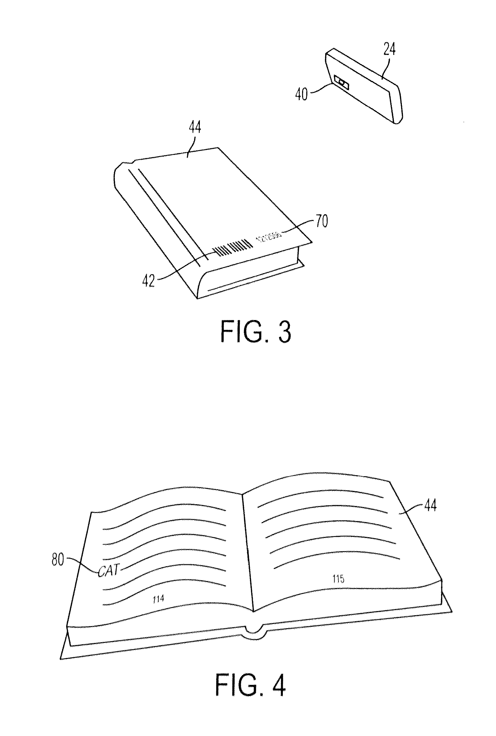

An example of how the book 44 may be identified is shown in FIGURE 3. Smartphone device 24 takes a picture of the book 44 including bar code 42 (containing the ISBN information). The phone 24 may locally translate the barcode to an ISBN or other number, or, if the device is not so enabled, may send a picture to the server 12. Translating the ISBN on the phone 24 is convenient in the case of a phone device 24 as it uses much less bandwidth over the network than sending an image 55. Also shown in FIGURE 3 is a serial number 70, allowing the publisher to allow only one digital copy to be granted to each hardcopy, preventing separate users from gaining access to multiple digital versions based on only one copy of a book. In particular, the serial number or other identifier 70 is received into system memory 16 and compared with a list of such serial numbers stored in memory or database 34. If the serial number is on the list, access to the publication is denied unless access rights to the digital publication are subsequently restored.

Returning to FIGURE 2, at S108, the publication ID component 54 verifies that the identified publication identifier matches a publication identifier in the publication identifier database 34. If the identifier is in the database 34, the publication ID component 54 may also verify that the book 48 is in the content database 38, which may be indicated by a value in the publication database 34. Not all hardcopy books may have a corresponding digital version listed in the publication ID database 34. For example, a hardcopy version of the book 44 that is only sold to libraries may not be, to avoid granting the user access based on a borrowed book. Alternatively, a library copy may be in the database but return a message indicating that this particular version of a book cannot be used to access a digital version. If the book code 42 is not in the database, a message indicating so may be returned to the user (S112).

At S110, if the publication identifier 42 is recognized as being in the publication database 34 and an electronic copy 48 is available in content database 38, a challenge 58 is issued to the user. For example, the challenge component 56 queries the challenge database 36 for a challenge. The challenge component 56 receives the challenge and issues the challenge to the user via the client computer 24. Alternatively, the challenge component 56 may automatically generate a challenge when the request for an electronic publication is received or thereafter.

The challenge may take many forms. In one embodiment, it is based on the content 46 of a specific or random location in the hardcopy version 44 of the book. In the embodiment shown in FIGURE 4, for example the challenge would ask, for example, "what the first word of the fourth line on page 114?" The user would then look up page 114 in book 44 and see that the word 46 which is the first word on the fourth line is "CAT," which is the correct response In this case, the correct response is the content at the specified location. U.S. Patent No. 7,937,653, issued May 3, 2011, entitled METHOD AND APPARATUS FOR DETECTING PAGINATION CONSTRUCTS INCLUDING A HEADER AND A FOOTER IN LEGACY DOCUMENTS, and U.S. Patent No. 7,797,622, entitled VERSATILE PAGE NUMBER DETECTOR by Hervé Déjean, et al., the disclosures of which are incorporated herein by reference, describe methods for identifying page numbers in a scanned or otherwise unstructured document which may be used for identifying the page numbers that the user will use for reference.

In another embodiment, the challenge question 58 may require deduction by the user, such as "what is the name of the animal described in the second paragraph on page 114?" Or the challenge may entail a computation by the user, such as "how many words are there in the fourth line on page 114?" Other challenge methods are contemplated. For example, if a book has pictures, the user may be asked what a picture is of or what items a picture contains on a certain page (e.g. "what sport is being played in the picture on page 57?" or "what type of ball is shown on page 57?"). For open ended questions, the answer could be multiple-choice. The user may also be asked to pick a picture which is most visually similar to a picture in the book. In each case, the response can be identified by a visual inspection of the hardcopy book and is generally unavailable to the user by other means. For example, the specific pages on which the responses can be found may not have been made available to users as a sample of digital content prior to purchasing the book. In other embodiments, the user may be asked to take a picture of a predetermined page or pages in the book, or portion thereof, such as an image, which may be compared to a page in the database, for example, by image comparison algorithms and/or by using OCR on the image, if the image resolution allows.

At S114, the challenge component 56 of the system 10 receives the response 60 from the user, which is intended to answer the challenge question, via the client device 24 and stores it in memory 16. For example, the user may then respond to the challenge, for example by entering the word "CAT" via the client device keyboard 45, by speaking the word into a microphone connected with a speech to text conversion module of the client device 24 or system 10, or by capturing a page image. The client device communicates the response to the system 10, where it is received into memory 16. In some embodiments, parts of the method may be performed with different computing devices 24. For example, the user may identify the book by entering a code 42 using a laptop or tablet computer and then respond to the challenge using a mobile phone or, alternatively, enter the code with the phone (e.g., via a picture or scanning a barcode) and respond to the challenge using a laptop or tablet computer (for example, to type a response).

At S116, a comparison is made between the user's response 60 and the correct response to see if there is a match, and if so, a determination may be made that the response is correct, otherwise it may be determined to be incorrect. In the case of a word, for example, the user may be required to submit the entire word correctly, i.e., an exact match for a correct response. In other embodiments, some latitude may be provided in what is considered to be a match and thus a correct response. The verification may be performed on the computing device 12. In other embodiments, the validation may be performed on the client device or at a remote database. In one embodiment, the challenge component verifies the response using the challenge database 36. For example, the challenge component forwards the user's response to the database 36 which determines whether it matches an expected response to the challenge for that book 44, and returns whether or not the user's response is correct. In another embodiment, the challenge component retrieves the correct response from the database 36 and compares the response from the database to the user's response. In yet other embodiments, the challenge component compares the user's response with a response to the challenge generated on-the-fly by the challenge component. In some embodiments, the user may be expected to provide correct responses to a plurality of challenges prior to being permitted access to the digital publication or a portion thereof.

If the user's response does not match the correct response, e.g., in the challenge database 36, then, at S112, a message may be sent to the client computer 24 informing the user that the response was incorrect. The user may be given a finite number of attempts to respond correctly before no more attempts are allowed. The user may have to wait for an amount of time between attempts or number of attempts.

If at S116, the user's response 60 matches the correct response, e.g., in the challenge database 36, or is otherwise determined to be a correct response to the challenge, the system may assume that the user is in physical possession of a hardcopy publication 44 for which digital rights to access the corresponding digital content 48 are permitted. The method then proceeds to S118.

At S118, the user is allowed to access the digital content 48 of the publication. For example, the content provider 62 or 64 retrieves the content 48 from the content database 38 and sends the content or a portion thereof to the client computer 24. The user may also be able to access portions of the content online to read the content via, e.g. a web browser on computer 24 or a separate computing device. The user may be able to access the content 48 after entering the user's login and password.

Access to the content 48 may be limited. For example, the content may be only available for a limited, predetermined period of time (e.g., for two weeks) and may expire after the period using DRM. In another embodiment, only a portion of the content may be made available. For example, the user may select to access a portion, such as the first or second or later one hundred pages of a book. Advantageously, this helps to ensure that the user retains possession of the hardcopy book 44 in order to read the entire book in digital form, making it more likely that the limited rights to access the digital copy 48 are not circumvented. Accessing only a portion of a book or magazine would be useful, for example, to a user who plans to take several books on a vacation on an e-reader without the need to bring the hardcopies. If the publication is a magazine, the user may be able to pick which articles the user wishes to access. This facilitates a magazine which uses a paywall allowing purchasers of a print version to access a digital version.

In some embodiments, a payment may be requested from the user prior to allowing access to the digital content 48. A service provided by the system may be packaged as a monthly or yearly subscription or per book (or magazine, etc.). The service may also be added to the cost of a book by selling two versions of a hardcopy - one which has the service enabled and which costs more and one which does not have the service available, but which is cheaper.

The method ends at S120.

The method illustrated in FIGURE 2 may be implemented in a computer program product that may be executed on a computer. The computer program product may comprise a non-transitory computer-readable recording medium on which a control program is recorded (stored), such as a disk, hard drive, or the like.

Alternatively, the method may be implemented in transitory media, such as a transmittable carrier wave in which the control program is embodied as a data signal using transmission media, such as acoustic or light waves, such as those generated during radio wave and infrared data communications, and the like.

The exemplary method may be implemented on one or more general purpose computers, special purpose computer(s), a programmed microprocessor or microcontroller and peripheral integrated circuit elements, or the like. In general, any device, capable of implementing a finite state machine that is in turn capable of implementing the flowchart shown in FIGURE 2, can be used to implement the method. As will be appreciated, in some embodiments one or more of the steps may be at least partially performed manually.

## Claims

1. A method of providing access to a digital version of a publication comprising:
with a computing device, receiving a publication identifier from a client device, the publication identifier identifying a hardcopy version of a publication;
providing a challenge to a user of the client device, the challenge being associated with a correct response which is identifiable by the user from the hardcopy version of the publication;
receiving a response to the challenge from the user;
with a processor, comparing the user's response to the correct response and based on the comparison, determining whether the user's response is the correct response; and
for a response which is determined to be correct, providing access to at least a portion of a digital version of the hardcopy publication.

2. The method of claim 1, wherein the publication identifier comprises a machine-readable graphical encoding.

3. The method of claim 1 or claim 2, further comprising:
comparing the received publication identifier with a stored publication identifier to determine whether the received publication identifier matches the stored publication identifier, the challenge being provided only when the received publication identifier is determined to match the stored publication identifier.

4. The method of any of the preceding claims, wherein the challenge identifies a location in the hardcopy publication where the correct response is identifiable.

5. The method of claim 4, wherein the challenge has a correct response which is in the form of text that is printed at the identified location in the hardcopy publication, or wherein the challenge is to identify a picture at the identified location in the hardcopy publication.

6. The method of claim 4, wherein the location is selected at random from a set of locations, each location in the set being associated with a respective challenge.

7. The method of any of the preceding claims, wherein access to the at least a portion of the digital version of the publication is provided by:
enabling the client device to download the digital version; and/or
enabling viewing of the at least a portion in a web browser.

8. The method of any of the preceding claims, wherein the at least a portion of the digital version of the hardcopy publication consists of a first portion of the digital version which is less than all of the digital version, and optionally, wherein access to a second portion of the digital version is provided at a later time.

9. The method of any of the preceding claims, wherein the access to the at least a portion of the digital version of the publication is provided for only a limited period of time, and/or is controlled by Digital Rights Management data associated with the digital version of the publication.

10. The method of any of the preceding claims, wherein the stored publication identifier is stored in a publication identifier database comprising a set of stored publication identifiers, one for each of a set of hardcopy publications and, optionally, wherein each of a plurality of hardcopy publications have the same content but different publication identifiers and the publication identifier database comprises a stored publication identifier for each of the plurality of hardcopy publications.

11. A method of allowing access to a digital version of a publication comprising:
receiving a publication identifier from a client device, the publication identifier being derived from a hardcopy version of a publication corresponding to a hardcopy version of a publication having a respective digital version, the publication identifier being derived by capturing an image of graphical encoding affixed to the hardcopy version of the publication;
confirming that the publication identifier is associated with digital rights to the digital version;
providing a challenge to the client device which is based on the content of a selected location in the hardcopy version of the publication;
receiving a response to the challenge from the client device;
if the response is determined to be correct, granting access to content to the digital version, comprising at least one of:
allowing the user to read at least a portion of the digital version of the publication when the client device is communicatively connected to a digital content provider; and
allowing the user to download at least a portion of the digital version of the publication, the user's rights to usage of the downloaded at least a portion of the digital version of the publication being enforced by Digital Rights Management information included with the at least the portion of the digital version.

12. A system for allowing access to a digital version of a publication based on a hardcopy version of the publication, the system comprising:
a publication identifier component for receiving a publication identifier from a client device, the publication identifier identifying a hardcopy version of a publication;
a challenge component for providing a challenge to a user of the client device, the challenge being associated with a correct response which is identifiable from the hardcopy version of the publication, and for receiving a response from the user and comparing the user's response to the correct response and based on the comparison, determining whether the user's response is the correct response;
a digital content provider component for providing access to at least a portion of a digital version of the hardcopy publication when the response is determined to be correct.

13. The system of claim 12, further comprising a challenge database which stores a plurality of challenges and respect correct responses, the challenge component accessing the challenge database for providing the challenge.

14. A system according to claim 12 or claim 13 adapted to carry out a method according to any of the preceding claims.

15. A computer program product comprising a non-transitory computer-readable medium storing instructions which, when executed by a computer, perform the method of any of claims 1 to 11.
